Europäisches Patentamt

European Patent Office

Office européen des brevets

(19)

(11) Publication number: **0 066 022**
**B1**

## EUROPEAN PATENT SPECIFICATION

(12)

(45) Date of publication of patent specification: **08.06.88**

(21) Application number: **81303281.0**

(22) Date of filing: **16.07.81**

(51) Int. Cl.⁴: **C 04 B 35/48,** F 02 F 7/00,
F 02 F 3/00

(54) Engine parts.

(30) Priority: **21.05.81 JP 75623/81**

(43) Date of publication of application:
**08.12.82 Bulletin 82/49**

(45) Publication of the grant of the patent:
**08.06.88 Bulletin 88/23**

(84) Designated Contracting States:
**AT CH DE FR GB IT LI NL SE**

(56) References cited:
EP-A-0 013 599
EP-A-0 036 786
FR-A-2 246 997
GB-A-1 588 516
US-A-3 976 809

TRANS. & JNAL BRITISH CERAMIC STY, vol. 80, no. 3, May-June 1981, pages 81-85, Stoke-on-Trent, G.B., R. STEVENS: "Zirconia: Second phase particle transformation toughening of ceramics"

(73) Proprietor: **NGK INSULATORS, LTD.**
**2-56, Suda-cho, Mizuho-ku**
**Nagoya-shi, Aichi 467 (JP)**

(72) Inventor: **Oda, Isao**
**19, Gokuraku 3-chome**
**Meito-ku Nagoya City (JP)**
Inventor: **Kaneno, Masayuki**
**77-1,Aza-Otsuhachiman**
**Kabaike Tokoname City (JP)**

(74) Representative: **Paget, Hugh Charles Edward et al**
**MEWBURN ELLIS & CO. 2/3 Cursitor Street**
**London EC4A 1BQ (GB)**

(56) References cited:
**CHEMICAL ABSTRACTS, vol. 73, 1970, page 281, no. 124368c, Columbus, Ohio, USA, R.N. PATIL et al.: "Monoclinic-tetragonal phase transitions in zirconia: mechanism, pretransformation, and coexistence: Communications of the American Ceramic Society, C-165 (oct,1982)**

EP 0 066 022 B1

Courier Press, Leamington Spa, England.

## Description

The present invention relates to engine parts composed of ceramic materials having excellent thermal insulation and mechanical strength.

Recently, studies for improving heat efficiency by increasing the operating temperature of internal combustion engines, such as Diesel engines and gasoline engines, have been made with a view to improving energy savings. In this case, in order to increase the operating temperature of engines, engine parts must be formed of heat resistant materials. However, hitherto engine parts have been composed of heat resistant metals, and there are limitations to the heat resistance of metal materials, so that it is difficult to obtain high operating temperatures of engines. Accordingly, it has been proposed, for example as described in Japanese Patent Laid Open Application No. 49,553/80, to use ceramic materials, such as oxides, nitrides and carbides, having excellent heat resistance for engine parts. However, most of these ceramic materials are very brittle and have low mechanical strength, being particularly susceptible to mechanical shock, so that it is difficult to produce engine parts only of ceramic materials and therefore it has been generally attempted to use ceramics in the form of composite bodies with metals.

However, the above described ceramic materials usually have low mechanical strength and the difference in thermal expansion between the ceramic materials and metals is large so that the ceramic materials are broken or gaps are formed between the ceramic and the combined metal due to thermal shock, and as a result these parts cannot be used.

The present invention aims to overcome these disadvantages and provide engine parts having excellent thermal insulation and mechanical strength, in which ceramic materials can be satisfactorily used in composite bodies with metal parts.

The present invention is set out in the respective first claims. The invention as claimed for designated states AT etc. is preferably a ceramic-metal composite body in which the partially stabilized zirconia component is bonded to a metal component.

Preferably the thermal expansion coefficient of the partially stabilized zirconia part is more than $10\times10^{-6}/°C$ and preferably also the difference between the thermal expansion coefficients of the zirconia part and of the metal part is less than $3\times10^{-6}/°C$.

The term "thermal expansion" used herein means linear thermal expansion.

The term "engine parts" used herein means parts used for high temperature gas generating portions or flowing passages and the like of engines, for example cylinders, cylinder liners, cylinder heads, pistons, piston caps, valve seats, exhaust port liners etc. of internal combustion engines such as Diesel engines and gasoline engines.

The present invention will now be described in more detail. Properties required of engine parts operating at high temperatures are excellent heat resistance, mechanical strength and thermal shock resistance, and in the case of engine parts composed of ceramic-metal composite bodies the compatibility of the ceramic material and metal material is very important. The present invention uses partially stabilized zirconia having high strength in engine parts, and in particular uses partially stabilized zirconia in which the difference of thermal expansion (%) between the thermal expansion curve during heating up and the thermal shrinkage curve during cooling down is less than 0.4% in the entire temperature range from room temperature to 1,000°C; preferably the thermal conductivity is less than 0.01 cal/cm sec °C.

The difference of thermal expansion at the same temperature during heating up and cooling down is generally known as the hysteresis phenomenon, and for engine parts which operate at high temperatures it is very important that the hysteresis of this thermal expansion is small and the maximum difference of the thermal expansion (%) at the same temperature is less than 0.4%. This is because in engine parts of internal combustion engines, in the parts repeatedly used at high temperature, the maximum temperature of which is about 1,000°C, parts having high thermal expansion hysteresis undergo dimensional change with lapse of time and in particular, when using ceramic-metal composite bodies, an excessive stress is applied to the parts or gaps are formed at the bonding portions of the composite bodies resulting in separation and finally breakage. Accordingly, as mentioned above, the difference of thermal expansion (%) at the same temperature during heating up and cooling down should be less than 0.4%, preferably less than 0.3%. Furthermore, the thermal expansion coefficient, bending strength and thermal conductivity of the partially stabilized zirconia also are very important.

When the engine parts are ceramic-metal composite bodies wherein partially stabilized zirconia and a metal are bonded, it is necessary that the ceramic is arranged so as to face the high temperature side; the thermal expansion coefficient of the partially stabilized zirconia having high strength is preferably more than $10\times10^{-6}/°C$ and the difference of the thermal expansion coefficient from that of cast iron or stainless steel generally used for metal parts is small. In this case, the difference between the thermal expansion coefficient of the partially stabilized zirconia and that of the metal is preferably less than $3\times10^{-6}/°C$, more particularly less than $2\times10^{-6}/°C$.

The zirconia part of the engine part of the present invention may be for example produced in the following manner. Fine powdery zirconium oxide having a crystallite size of less than 100 nm (1,000 Å) or amorphous fine powdery zirconium oxide is mixed with 1—8 mol% of $Y_2O_3$ or a total amount of 1—15 mol% of a mixture of $Y_2O_3$ and CaO to prepare a powdery mixture. The resulting powdery mixture is preliminarily moulded into a desired shape by a conventional process, such as isostatic pressing,

2

extrusion, or slip casting, and the shaped article is subjected to rough machining and fired at a temperature of 1,000—1,500°C to obtain a fired article. This fired article is partially stabilized zirconia composed mainly of tetragonal phase or a mixed phase of tetragonal and cubic and having a content of monoclinic phase of less than 10% and an average crystal grain size of less than 2 μm. This fired article is finally machined by means of a lathe or grinding wheel and polished, if necessary, into the desired shape for the engine part. The surface roughness at the polished surface is preferably less than 10 μm, particularly less than 1 μm.

This partially stabilized zirconia is referred to as "partially stabilized zirconia having high strength" in the present invention because the partially stabilized zirconia having high strength has different physical properties, particularly as regards strength and thermal expansion, from stabilized zirconia consisting mainly of cubic phase or common partially stabilized zirconia consisting mainly of a mixed system of tetragonal phase and monoclinic phase and containing a fairly large amount of monoclinic phase. The ceramic-metal composite bodies are produced by tightly contacting the above described ceramic part with a metal part and bonding these parts by a press fitting process, a bonding process utilizing an intermediate layer or a combination of these processes. When the bonding is carried out by press fitting, the inner diameter of the metal part is adjusted so as to be smaller than the outer diameter of the ceramic part and heated at a temperature of 150—400°C, and in the expanded metal part is fitted a ceramic part at a low temperature and the metal part is cooled whereby a compression stress is applied to the ceramic part and a tensile stress is applied to the metal part. In the process for bonding a metal part and a ceramic part utilizing an intermediate layer, for example, a metallized layer is formed by metal spraying on a bonding surface of a ceramic part and then the metallized layer and the metal part are contacted and heated to bond these parts.

The invention will be further described with reference to the following illustrative Examples. In the Examples reference will be made to the accompanying drawings, in which:

Figure 1 is a cross-sectional view of a cylinder liner for a Diesel engine composed of a ceramic-metal composite body of the present invention as described in Example 1;

Figure 2 is a cross-sectional view of a piston for a Diesel engine composed of a ceramic-metal composite body of the present invention as described in Example 2; and

Figure 3 comprises cross-sectional and plan views of a cylinder head made of a ceramic material of the present invention as described in Example 3.

Example 1

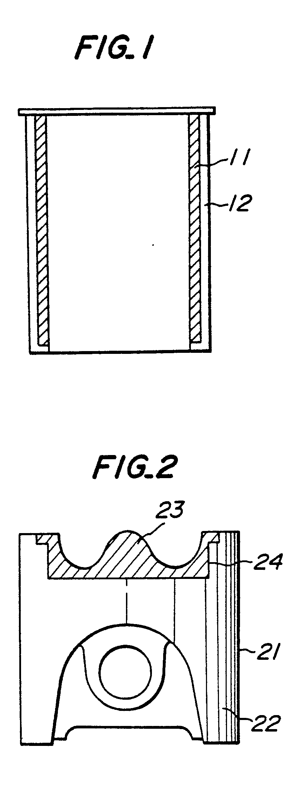

A ceramic liner 11 composed of partially stabilized zirconia having high strength and consisting mainly of tetragonal phase and having an average crystal grain size of 2 μm and containing 5 mol% of $Y_2O_3$ was fitted inside a metal sleeve 12 made of grey cast iron as shown in Figure 1 by a press fitting process to produce a cylinder liner for a Diesel engine. For comparison, similar cylinder liners were produced by using alumina and sintered silicon nitride. The physical properties of these three ceramic materials are shown in Table 1.

TABLE 1

| | Ceramic material | Four-point bending strength (kg/mm$^2$) | Thermal expansion coefficient ($\times 10^{-6}/°C$) | Thermal conductivity (cal/cm sec °C) | Difference of thermal expansion coefficient of cast iron from ceramic ($\times 10^{-6}/°C$) |
|---|---|---|---|---|---|
| Cylinder liner of present invention | Partially stabilized zirconia having high strength | 61 | 10.3 | 0.006 | 0.2 |
| Comparative cylinder liners | Alumina | 44 | 8.1 | 0.070 | 2.4 |
| | Sintered silicon nitride | 55 | 3.3 | 0.067 | 7.2 |

A single cylinder engine test was made using these three kinds of cylinder liners, and the following was observed. In the cylinder using alumina, cracks were formed in the alumina liner five minutes after starting the test and a part of the liner came away, and a blow-by phenomenon was observed. In the cylinder using sintered silicon nitride, a gap was formed between the liner and the metal sleeve 10 minutes after starting the test and the liner was broken after 15 minutes, and the blow-by phenomenon was observed. In contrast,

3

# 0 066 022

in the sample in accordance with the invention wherein partially stabilized zirconia having high strength was used, even after a test of 100 hours this sample operated normally without causing any trouble. In the cylinder liners using alumina and sintered silicon nitride, the temperature of the metal sleeve was more than 100°C higher than the temperature in the case using partially stabilized zirconia having high strength and the heat loss was larger.

Example 2

A piston cap 23 as shown in Figure 2 was produced by using partially stabilized zirconia having high strength and having the properties shown in the following Table 2, and this piston cap was fitted in a recess 24 at the upper portion of a piston body 22 made of cast iron by a shrink fitting process to produce a piston 21 composed of a ceramic-metal composite body. This piston was assembled in a Diesel engine and an engine test was effected for 30 minutes by raising the gas temperature to 850°C. The same test was carried out using comparative samples produced in the same manner as described above and having the properties shown in the following Table 2. After completion of the engine test, the piston caps were examined, and no degradation was observed in the piston according to the present invention, but in the comparative samples cracks were formed in the piston caps and parts came away.

TABLE 2

| | Ceramic material | Four-point bending strength (kg/mm²) | Thermal expansion coefficient $(10^{-6}/°C)$ | Difference of thermal expansion during heating up and cooling down (%) | Difference of thermal expansion coefficient of cast iron from ceramic $(10^{-6}/°C)$ |
|---|---|---|---|---|---|
| Piston cap of present invention | Partially stabilized zirconia having high strength | 61 | 10.3 | 0.2 | 0.2 |
| Comparative piston caps | Stabilized zirconia | 19 | 10.9 | 0 | 0.4 |
| | Partially stabilized zirconia | 30 | 8.6 | 0.1 | 1.9 |
| | " | 51 | 10.1 | 0.5 | 0.4 |

Example 3

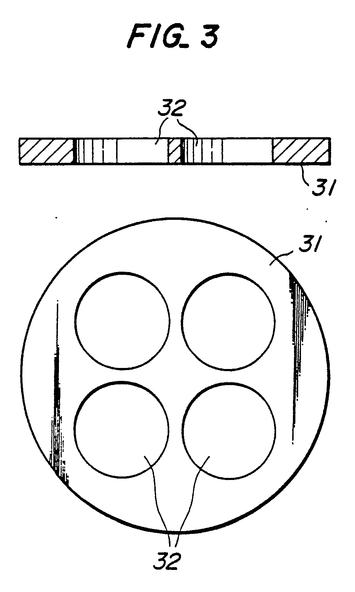

By using partially stabilized zirconia having high strength and consisting mainly of a mixed phase of tetragonal and cubic and having 4 mol% of $Y_2O_3$, a cylinder head 31 having four openings 32 as shown in Figure 3 was produced. For comparison, a similar cylinder head was produced by using silicon nitride having the properties shown in Table 1. These cylinder heads were assmbled in a Diesel engine and an engine test was carried out. In the cylinder head according to the present invention made of partially stabilized zirconia no degradation was observed, while the cylinder head of the comparative sample composed of silicon nitride had a larger difference in thermal expansion from metal in a valve seat, so that abnormal gaps were formed between both the metal and ceramic parts and the head was broken by mechanical vibration.

As can be seen from the above, when engine parts of the invention are used, engines using such parts can be operated at high temperatures because of the excellent heat resistance and thermal insulation possessed by the partially stabilized zirconia having high strength and the heat loss is low, so that the engine efficiency is higher. Even when the engines are operated at high temperatures the engine parts are rarely broken owing to mechanical shock and thermal shock.

Furthermore, in the engine parts of the present invention, the difference of thermal expansion of the ceramic from the metal is very small and the hysteresis of thermal expansion is particularly small, so that the fitting of the ceramic and the metal is very tight, and even when an engine is operated at high temperature for a long time no gap is formed at the bonding portion between the ceramic and metal parts, and a ceramic inner cylinder for example in particular neither comes away nor is broken.

Accordingly, the engine parts of the present invention have excellent durability and reliability and can be used as engine parts having improved heat efficiency, such as cylinders, cylinder liners, cylinder heads, pistons, piston caps, valve seats and exhaust port liners.

4

# 0 066 022

**Claims for the Contracting States: AT CH IT LI NL SE**

1. A ceramic engine part which comprises a partially stabilized zirconia part (11, 13) mainly consisting of either a tetragonal crystal phase of zirconia or a mixture of tetragonal crystal phase of zirconia and a cubic phase of zirconia and containing a monoclinic crystal phase of zirconia in an amount less than 10%, and having a four point bending strength of more than 50 kg/mm² and a thermal expansion hysteresis which provides for a maximum difference in expansion percents of 0.4% existing between the thermal expansion heating curve and the thermal shrinkage cooling curve at any temperature occurring between room temperature and 1000°C.

2. An engine part as claimed in Claim 1 wherein the thermal expansion coefficient of the partially stabilized zirconia part is more than $10 \times 10^{-6}$/°C.

3. An engine part as claimed in Claim 1 or Claim 2 which is a ceramic-metal composite body in which said partially stabilized zirconia part is bonded with or without the use of a bonding layer to a metal component (12, 22).

4. An engine part as claimed in Claim 3 wherein the difference between the thermal expansion coefficient of the partially stabilized zirconia part and that of the metal component is less than $3 \times 10^{-6}$/°C.

5. An engine part as claimed in any of Claims 1 to 4, wherein the said maximum difference between the thermal expansion heating curve and the thermal shrinkage cooling curve is less than 0.3%.

**Claims for the Contracting States: DE FR GB**

1. A ceramic engine part which is a ceramic-metal composite body which has a partially stabilized zirconia part (11, 23) and a metal part (12, 22) bonded together with or without the use of a bonding layer, said partially stabilized zirconia part mainly consisting of either a tetragonal crystal phase of zirconia or a mixture of tetragonal crystal phase of zirconia and a cubic phase of zirconia and containing a monoclinic crystal phase of zirconia in an amount less than 10%, and having a four point bending strength of more than 50 kg/mm² and a thermal expansion hysteresis which provides for a maximum difference in expansion percents of 0.4% existing between the thermal expansion heating curve and the thermal shrinkage cooling curve at any temperature occurring between room temperature and 1000°C.

2. An engine part as claimed in Claim 1 wherein the thermal expansion coefficient of the partially stabilized zirconia part is more than $10 \times 10^{-6}$/°C.

3. An engine part as claimed in Claim 1 or Claim 2 wherein the difference between the thermal expansion coefficient of the partially stabilized zirconia part and that of the metal part is less than $3 \times 10^{-6}$/°C.

4. An engine part as claimed in any of Claims 1 to 3, wherein the said maximum difference between the thermal expansion heating curve and the thermal shrinkage on cooling curve is less than 0.3%.

5. An engine part as claimed in any one of Claims 1 to 4, which is a part which in use contacts high temperature gases.

**Patentansprüche für die Vertragsstaaten: AT CH IT LI NL SE**

1. Keramischer Motorteil, der einen teilweise stabilisierten Zirkondioxidteil (11, 13) umfaßt, der vorwiegend aus entweder einer tetragonalen Kristallphase von Zirkondioxid oder einer Mischung aus einer tetragonalen Kristallphase von Zirkondioxid und einer kubischen Phase von Zirkondioxid besteht und eine monokline Kristallphase von Zirkondioxid in einer Menge von weniger als 10% enthält und eine Vierpunkt-Biegefestigkeit von mehr als 50 kg/mm² und eine Wärmedehnungshysterese besitzt, die einen maximalen Unterschied in Dehnungsprozent von 0,4% aufweist, der zwischen der Wärmedehnungs-Erwärmungskurve und der Wärmeschrumpfungs-Abkühlungskurve bei jeder Temperatur zwischen Raumtemperatur und 1000°C besteht.

2. Motorteil nach Anspruch 1, worin der Wärmedehnungskoeffizient des aus teilweise stabilisiertem Zirkondioxid bestehenden Teils mehr als $10 \times 10^{-6}$/°C beträgt.

3. Motorteil nach Anspruch 1 oder 2, der ein Keramik-Metall-Verbundkörper ist, in dem der genannte aus teilweise stabilisiertem Zirkondioxid bestehende Teil mit oder ohne Verwendung einer Bindungsschicht an einen Metallbestandteil (12, 22) gebunden ist.

4. Motorteil nach Anspruch 3, worin der Unterschied zwischen dem Wärmedehnungskoeffizienten des aus teilweise stabilisiertem Zirkondioxid bestehenden Teils und jenem des Metallteils weniger als $3 \times 10^{-6}$/°C beträgt.

5. Motorteil nach einem der Ansprüche 1 bis 4, worin der genannte maximale Unterschied zwischen der Wärmedehnungs-Erwärmungskurve und der Wärmeschrumpfungs-Abkühlungskurve weniger als 0,3% beträgt.

**Patentansprüche für die Vertragsstaaten: DE FR GB**

1. Keramischer Motorteil, der ein Keramik-Metall-Verbundkörper ist, der einen aus teilweise stabilisiertem Zirkondioxid bestehenden Teil (11, 23) und einen Metallteil (12, 22) aufweist, die mit oder

5

ohne Verwendung einer Bindungsschicht aneinander gebunden sind, wobei der genannte aus teilweise stabilisiertem Zirkondioxid bestehende Teil vorwiegend aus entweder einer tetragonalen Kristallphase von Zirkondioxid oder einer Mischung aus einer tetragonalen Kristallphase von Zirkondioxid und einer kubischen Phase von Zirkondioxid besteht und eine monokline Kristallphase von Zirkondioxid in einer Menge von weniger als 10% enthält und eine Vierpunkt-Biegefestigkeit von mehr als 50 kg/mm$^2$ und eine Wärmedehnungshysterese besitzt, die einen maximalen Unterschied in Dehnungsprozenten von 0,4% aufweist, der zwischen der Wärmedehnungs-Erwärmungskurve und der Wärmeschrumpfungs-Abkühlungskurve bei jeder Temperatur zwischen Raumtemperatur und 1000°C besteht.

2. Motorteil nach Anspruch 1, worin der Wärmedehnungskoeffizient des aus teilweise stabilisiertem Zirkondioxid bestehenden Teils mehr als $10\times10^{-6}/°C$ beträgt.

3. Motorteil nach Anspruch 1 oder 2, worin der Unterschied zwischen dem Wärmedehnungskoeffizienten des aus teilweise stabilisiertem Zirkondioxid bestehenden Teils und jenem des Metallteils weniger als $3\times10^{-6}/°C$ beträgt.

4. Motorteil nach einem der Ansprüche 1 bis 3, worin der genannte maximale Unterschied zwischen der Wärmedehnungs-Erwärmungskurve und der Wärmeschrumpfungs-Abkühlungskurve weniger als 0,3% beträgt.

5. Motorteil nach einem der Ansprüche 1 bis 4, welcher Teil während der Verwendung mit Gasen mit hohen Temperaturen in Berührung steht.

## Revendications pour les Etats contractants: AT CH IT LI NL SE

1. Elément de moteur en céramique qui comprend un élément de zircone partiellement stabilisée (11, 13) consistant principalement soit en une phase cristalline tétragonale de zircone ou un mélange de phase cristalline tétragonale de zircone et d'une phase cubique de zircone et contenant une phase cristalline monoclinique de zircone en une quantité inférieure à 10%, et ayant une résistance à la flexion en quatre points de plus de 50 kg/mm$^2$ et une hystérésis à la dilatation thermique qui donne une différence maximale de pourcentages de dilatation de 0,4% entre la courbe de chauffage avec dilatation thermique et la courbe de refroidissement avec rétrécissement thermique à toute température se présentant entre la température ambiante et 1000°C.

2. Elément de moteur selon la revendication 1 où le coefficient de dilatation thermique de l'élément de zircone partiellement stabilisée est supérieur à $10\times10^{-6}/°C$.

3. Elément de moteur selon la revendication 1 ou la revendication 2 qui est un corps composite céramique-métal où ledit élément de zircone partiellement stabilisée est lié avec ou sans utilisation d'une couche de liaison à un composant de métal (12, 22).

4. Elément de moteur selon la revendication 3 où la différence entre le coefficient de dilatation thermique de l'élément de zircone partiellement stabilisée et celui du composant de métal est plus faible que $3\times10^{-6}/°C$.

5. Elément de moteur selon l'une quelconque des revendications 1 à 4 où ladite différence maximale entre la courbe de chauffage avec dilatation thermique et la courbe de refroidissement avec rétrécissement thermique est inférieure à 0,3%.

## Revendications pour les Etats contractants: DE FR GB

1. Elément de moteur en céramique qui est un corps composite céramique-métal qui a un élément de zircone partiellement stabilisée (11, 23) et un élément de métal (12, 22) liés l'un à l'autre avec ou sans l'utilisation d'une couche de liaison, ledit élément de zircone partiellement stabilisée consistant principalement en une phase cristalline tétragonale de zircone ou un mélange de phase cristalline tétragonale de zircone et d'une phase cubique de zircone et contenant une phase cristalline monoclinique de zircone en une quantité inférieure à 10%, et ayant une résistance à la flexion en quatre points de plus de 50 kg/mm$^2$ et une hystérésis à la dilatation thermique qui produit une différence maximale des pourcentages de dilatation de 0,4% entre la courbe de chauffage avec dilatation thermique et la courbe de refroidissement avec rétrécissement thermique à toute température se présentant entre la température ambiante et 1000°C.

2. Elément de moteur selon la revendication 1 où le coefficient de dilatation thermique de l'élément de zircone partiellement stabilisée est supérieur à $10\times10^{-6}/°C$.

3. Elément de moteur selon la revendication 1 ou la revendication 2 où la différence entre le coefficient de dilatation thermique de l'élément de zircone partiellement stabilisée et celui de l'élément en métal est inférieure à $3\times10^{-6}/°C$.

4. Elément de moteur selon l'une quelconque des revendications 1 à 3 où ladite différence maximale entre la courbe de chauffage avec dilatation thermique et la courbe de refroidissement avec rétrécissement thermique est inférieure à 0,3%.

5. Elément de moteur selon l'une quelconque des revendications 1 à 4 qui est un élément qui, en utilisation, est en contact avec des gaz à haute température.

## FIG. 1

*11*

*12*

## FIG. 2

*23*

*24*

*21*

*22*

# FIG. 3